# FASCICULE DE BREVET EUROPEEN

(11) **EP 2 987 124 B1**
(45) Date de publication et mention de la délivrance du brevet: **29.05.2019**
(21) Numéro de dépôt: 13717701.0
(22) Date de dépôt: 22.04.2013
(51) Int. Cl.: G06Q 20/38, G06Q 20/20

(54) **METHODE ET SYSTEME D'AMELIORATION DE LA SECURITE DES TRANSACTIONS ELECTRONIQUES**
VERFAHREN UND SYSTEM ZUR VERBESSERUNG DER SICHERHEIT ELEKTRONISCHER TRANSAKTIONEN
METHOD AND SYSTEM FOR IMPROVING THE SECURITY OF ELECTRONIC TRANSACTIONS

(30) Priorité: 15.04.2013 FR 1353407
(43) Date de publication de la demande: 24.02.2016
(73) Titulaire: ONEY BANK, 59170 Croix (FR)
(72) Inventeur: FERLIN, Benoit, F-59320 Hallennes-lez-Haubourdin (FR); RIZET, Alexis, 59170 Croix (FR)
(74) Mandataire: Demulsant, Xavier
(86) Numéro de dépôt international: PCT/FR2013/050888
(87) Numéro de publication internationale: WO 2014/170561

(56) Documents cités:
- EP-A1- 2 506 176
- EP-A1- 2 571 192
- WO-A1-2010/067650
- CN-B- 101 420 303
- CN-U- 202 711 262
- JP-A- 2012 050 075
- KR-A- 20120 134 822
- KR-A- 20120 137 093
- KR-A- 20120 137 093
- US-A1- 2006 013 402
- US-A1- 2009 138 715
- US-A1- 2010 011 213
- US-A1- 2011 099 369
- US-A1- 2013 073 850

## Description

La présente invention a trait au domaine technique de la sécurisation des communications entre un terminal de vente et un serveur de contrôle de transaction.

On entend ci-après, par terminal de vente tout dispositif physique ou virtuel permettant d'effectuer une transaction électronique. A titre d'exemples non-exhaustifs on peut citer :
- comme terminaux de vente physiques : des bornes de vente de titres de transport pour des acteurs dans le domaine des transports (ferroviaire, aérien, maritime), des caisses enregistreuses sur des sites commerçants (pharmacies, restaurants), des caisses équipées d'un système de « self-checking » dans certains magasins (hypermarchés);
- comme terminaux de vente virtuels : des sites e-commerce proposant la vente de services et/ou de produits via un site webet/ou une application mobile dédiée.

Afin de pouvoir assurer les transactions, les gestionnaires des terminaux de vente sont amenés à déployer ou faire déployer lesdits terminaux sur des points de vente.

On entend ici par point de vente (ou POS en anglais pour « Point of Sale ») tout lieu physique ou virtuel proposant l'accomplissement de transaction, notamment la vente de produits (par exemples agroalimentaires, pharmaceutiques, multimédias) et/ou de services (par exemples livraisons, restauration, voyages, hôtellerie) indépendamment de sa taille ou de son domaine d'activité.

Suite à une demande de transaction initiée par un utilisateur sur un terminal de vente, ce terminal de vente peut être amené à effectuer un certain nombre de tâches afin de compléter cette transaction. Ces tâches consistent notamment à identifier et enregistrer des articles (produits ou/et services) à facturer à l'utilisateur, informer l'utilisateur concernant ladite transaction, et enfin gérer le paiement.

La tâche d'information de l'utilisateur concernant ladite transaction, consiste à titre d'exemple, à fournir à l'utilisateur un numéro identifiant la transaction, un numéro identifiant le terminal de vente utilisé par l'utilisateur, un récapitulatif de la liste des produits et/ou services concernés par la transaction, le montant à facturer à l'utilisateur ou encore le statut de la transaction.

L'ensemble des informations concernant la transaction peut être affiché selon différents modes : soit de manière virtuelle par exemple sur un écran d'une borne de paiement, soit de manière physique sur un support tel qu'un ticket de caisse.

Indépendamment du mode d'affichage (physique ou virtuel) des informations concernant la transaction, lesdites informations peuvent être affichées de différentes manières : par exemple sous forme textuelle, de code barre, de tag, de code QR (« Quick Response »), via un signal de type NFC ou plus généralement de tout type de codage d'informations.

Par ailleurs, afin de garantir aux utilisateurs un confort d'utilisation des terminaux de vente et donc un haut niveau de satisfaction, les terminaux de vente doivent pouvoir garantir le support des technologies les plus récentes. Parmi elles, on peut citer notamment le support du paiement mobile via un terminal mobile appartenant à l'utilisateur et/ou l'utilisation d'une application mobile installée sur le terminal mobile de l'utilisateur, afin d'interagir avec le terminal de vente préférentiellement via une interface sans-fil.

Par terminal mobile, on désigne ici notamment un téléphone mobile, un Smartphone, un PDA (personnal digital assistant) ou tout autre type de système de communication capable de récupérer les informations de transactions imprimées ou affichées par un terminal de vente et d'interagir avec un serveur distant.

On peut citer à titre d'exemple, le service de paiement à distance du stationnement de véhicule par terminal mobile, proposant via l'utilisation de différents terminaux de vente, un service de paiement à destinations de différentes catégories de terminaux utilisateur. Un automobiliste voulant payer un ticket de stationnement sélectionne une zone ou un tarif de stationnement représenté par un code figurant sur les horodateurs ou sur internet, puis confirme le véhicule et la durée souhaitée. Cette solution fonctionne sur tout type de téléphones portables. Ainsi, il est possible d'accéder au service via un navigateur internet ou encore via une application Smartphone dédiée.

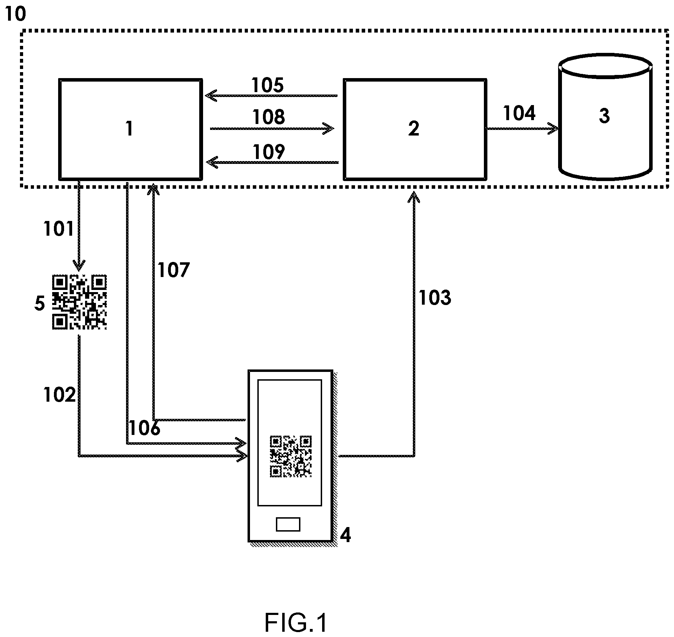

La figure 1 représente un système de vente **10**, comprenant un terminal de vente **1** et un serveur de contrôle de transaction **2** distant.

Par contrôle de transaction, on entend ici la gestion (à titre d'exemples réception, vérification, autorisation, validation) d'une liste d'informations transmises (par exemple identifiants, codes, statut de la transaction) associées à la transaction.

Dans l'état de la technique, le procédé mis en oeuvre afin de mener une transaction entre un terminal de vente et un utilisateur muni d'un terminal mobile est le suivant.

Suite à une requête de transaction effectuée par un utilisateur muni d'un terminal mobile **4**, par exemple d'un Smartphone, le terminal de vente **1** génère et affiche un ensemble d'informations relatives à la transaction (interaction **101**) sous forme par exemple d'un code QR **5.**

L'utilisateur, à l'aide de son Smartphone **4**, capture le code QR **5** (interaction **102**) via une application dédiée.

Par application dédiée, on entend ici une application installée par l'utilisateur et répondant aux besoins d'un service spécifique. L'utilisateur peut être amené au préalable à souscrire audit service spécifique avant de pouvoir utiliser l'application dédiée correspondante. Ainsi à titre d'exemple, dans le cadre d'une application associée à un service de paiement, l'utilisateur devra au préalable souscrire audit service et fournir un certain nombre de données personnelles le concernant, par exemple ses identifiants bancaires. Suite à la souscription de l'utilisateur au service de paiement, l'application dédiée stockera alors sur le Smartphone une clef de chiffrement associée à la carte de paiement de l'utilisateur et une clé de chiffrement associée au code secret de l'utilisateur, en vue de leur future utilisation lors d'une transaction.

Il est entendu ici que l'utilisation d'un Smartphone et d'une application dédiée pour capturer un code QR est un exemple non-limitatif, et concerne de manière générale la capture d'informations de transaction par tout terminal mobile équipé d'un dispositif approprié.

Une fois le code QR capturé, le Smartphone **4** transmet au serveur de contrôle de transaction **2** distant le code QR capturé, des éléments d'identifications (par exemple des identifiants concernant le Smartphone et/ou l'utilisateur), la clef de déchiffrement de la carte de paiement de l'utilisateur ainsi que la clef de déchiffrement du code secret de l'utilisateur (interaction **103**).

Dès réception de ces données, le serveur de contrôle de transaction **2** identifie le terminal de vente **1** à l'aide du code QR. Il crée alors un identifiant de transaction et insère dans une base de données **3** un enregistrement (interaction **104**), contenant les éléments relatifs à la transaction (à titre d'exemple les identifiants du Smartphone **4** et du terminal de vente **1**) ainsi qu'un code relatif à l'état de la transaction.

Le serveur de contrôle de transaction **2** déchiffre ensuite les données de la carte de l'utilisateur à l'aide de la clef de déchiffrement correspondante transmise lors de l'interaction **103**, puis lance un processus mémoire en charge de scruter le code relatif à l'état de la transaction afin de déclencher une demande d'autorisation de transaction le moment venu.

Puis, le serveur de contrôle de transaction **2**, déchiffre le code secret de l'utilisateur à l'aide de la clef de déchiffrement correspondante transmise lors de l'interaction **103**, et génère une première chaîne aléatoire. Ladite première chaîne aléatoire est alors concaténée avec le code secret utilisateur, puis cryptée selon un premier algorithme de cryptographie. On obtient au final une chaîne de donnée cryptée nommée CSC (acronyme de Code Sécuritaire Crypté). La chaîne CSC obtenue (premier message crypté) est alors stockée dans la base de données **3** au niveau de la transaction (interaction **104**).

Ladite première chaîne aléatoire est par la suite transmise par le serveur de contrôle de transaction **2** au terminal de vente **1** en charge de la transaction avec l'utilisateur (interaction **105**).

A la réception de la première chaîne aléatoire, le terminal de vente **1** invite l'utilisateur à saisir son code secret (interaction **106**). Ce code secret est :
- soit supposé être le même que ledit code secret déchiffré par le serveur de contrôle de transaction **2**;
- soit de manière plus générale lié au code secret déchiffré par le serveur de contrôle de transaction **2**, c'est-à-dire qu'un code est déductible de l'autre en lui appliquant un procédé spécifique.

Après la saisie et validation du code secret par l'utilisateur (interaction **107**), le terminal de vente **1** concatène le code saisi avec ladite première chaîne aléatoire transmise par l'interaction **105**, puis applique le même type de cryptage, c'est-à-dire utilise le même dit premier algorithme de cryptographie que le serveur de contrôle de transaction **2**, afin de générer une chaîne CSC (deuxième message crypté) qu'on désignera par la suite par « CSC saisi ».

L'interaction **108** permet au terminal de vente **1,** de communiquer le « CSC saisi » au serveur de contrôle de transaction **2.**

Le code secret utilisateur transmis au terminal de vente **1** étant supposé être le même que le (ou lié au) premier code secret décodé au niveau du serveur de contrôle de transaction **2**, le « CSC saisi» obtenu est donc supposé être le même que le CSC générée par le serveur de contrôle de transaction **2.**

Dès réception du « CSC saisi », le serveur de contrôle de transaction **2** compare le « CSC saisi » avec le CSC qu'il a lui-même généré et stocké dans la base de données **3.** Si ces deux éléments sont identiques, alors le code secret utilisateur transmis est correct et le serveur de contrôle de transaction **2** effectue alors l'autorisation et informe le terminal de vente **1** par l'interaction **109** qu'il peut clôturer la transaction. Dans le cas contraire, il informe le terminal de vente **1** par l'interaction **109** que le code saisi par l'utilisateur est erroné afin d'inviter l'utilisateur à de nouveau saisir son code (interactions **106** et **107**) et retransmettre ainsi un nouveau « CSC saisi » au serveur de contrôle de transaction **2** (interaction **108**).

L'avantage de ce procédé réside essentiellement dans le fait qu'un même code secret saisi lors de deux transactions différentes donne lieux à deux chaînes cryptées (de type « CSC saisi ») différentes. Ceci permet de garantir l'impossibilité de trouver le code secret d'un utilisateur.

Cependant, une faille importante a été identifiée au cours de ce procédé le rendant vulnérable à une attaque connue couramment sous le nom de « Man in the Middle ». Celle-ci consiste à scruter/intercepter particulièrement l'interaction entre le serveur de contrôle de transaction **2** et le terminal de vente **1** (interactions **105**, **108** et **109**) puis simuler le serveur de contrôle de transaction **2** via l'interaction **109** en retournant systématiquement au terminal de vente **1** une réponse positive (ou négative) quel que soit le «CSC saisi » transmis par l'interaction **108.**

L'interaction **109** est particulièrement critique car celle-ci transmet la réponse finale du serveur de contrôle de transaction **2** : c'est à partir de la réponse transmise par cette interaction **109**, que le terminal de vente **1** valide/rejette et/ou clôture la transaction. Une des limites de l'état de la technique réside donc dans la vulnérabilité constatée pour l'interaction **109**, notamment si le protocole employé au cours de cette interaction est analysable et reproductible par un individu extérieur.

Une autre faille permet de procéder sur l'interaction **108**, à une attaque connue sous le nom d'« attaque par force brute ». Ce procédé consiste à tester de façon exhaustive toutes les combinaisons possibles de caractères, de manière à trouver au moins une information valide, ici le code secret de l'utilisateur.

Ainsi si un hacker dispose de l'algorithme de cryptographie utilisé par le terminal de vente **1** et parvient à intercepter l'interaction **108**, il lui sera possible via une méthode d'« attaque par force brute » de parvenir à identifier dans le « CSC saisi » le code secret de l'utilisateur.

Le document CN101420303 décrit une méthode visant à améliorer la sécurité de communication d'un contenu audio.

Un objet de la présente invention est de pallier les inconvénients de l'art antérieur.

Un autre objet de la présente invention est de pouvoir améliorer la sécurisation des échanges entre un terminal de vente et un serveur de contrôle de transaction.

Dans ce but, l'invention se rapporte, selon un premier aspect, à une méthode de sécurisation des communications entre un terminal de vente et un serveur de contrôle de transaction selon la revendication 1.

Diverses caractéristiques supplémentaires peuvent, selon les revendications dépendantes, être prévues seules ou en combinaison. L'invention se rapporte, selon un deuxième aspect, à un serveur de contrôle de transaction selon la revendication 6.

L'invention se rapporte, selon un troisième aspect, à un terminal de vente selon la revendication 7.

L'invention se rapporte, selon un quatrième aspect, à un système pour sécuriser des communications entre un terminal de vente et un serveur de contrôle de transaction selon la revendication 8.

L'invention se rapporte, selon un cinquième aspect, à un produit programme d'ordinateur implémenté sur un support mémoire, susceptible d'être mis en oeuvre au sein d'une unité de traitement informatique et comprenant des instructions pour la mise en oeuvre de la méthode indiquée ci-dessus.

D'autres caractéristiques et avantages de l'invention apparaîtront plus clairement et de manière concrète à la lecture de la description ci-après de modes de réalisation préférés, laquelle est faite en référence à la figure 1 qui illustre schématiquement le contexte de mise en oeuvre d'un mode de réalisation.

La présente invention propose d'enrichir le contenu du code QR **5** transmis par les interactions **101, 102,103** et de modifier le contenu des échanges transmis par les interactions **108** et **109.**

Suite à une requête de transaction effectuée par un utilisateur muni d'un terminal mobile **4**, par exemple d'un Smartphone, le terminal de vente **1** génère et affiche un ensemble d'informations relatives à la transaction (interaction **101**) sous forme par exemple d'un code QR **5.**

L'ensemble des informations généré puis affiché comprend des informations relatives à la transaction, dont au moins une information d'identification fournie par le terminal de vente **1.**

D'une manière générale, l'information d'identification fournie par le terminal de vente **1**, consiste en toute information convenue au préalable entre le terminal de vente **1** et le serveur de contrôle de transaction **2**, ou encore toute autre information connue de part et d'autre.

A titre d'exemples, l'information d'identification fournie par le terminal de vente **1**, peut comprendre un jeton d'authentification et/ou une adresse IP connus du serveur de contrôle de transaction **2.**

Cette information d'identification va ensuite être complétée par une chaîne aléatoire composée d'une série de caractères aléatoires, générée par le terminal de vente **1.**

On désignera par là suite cette chaîne aléatoire par « deuxieme chaine aléatoire », afin de la distinguer de la première chaîne aléatoire générée au niveau du serveur de contrôle de transaction **2**, lors de la construction du premier message crypté CSC.

Dans un mode de réalisation, le terminal de vente **1** génère et affiche un ensemble d'informations (interaction **101**) sous forme par exemple d'un code QR **5**, formé d'un jeton d'authentification connu du serveur de contrôle de transaction **2**, ledit jeton d'authentification étant complété par une série de caractères aléatoires générés par le terminal de vente **1.**

Le code QR **5**, et plus généralement l'ensemble des informations affiché par le terminal de vente **1** (interaction **101**), capturé par le terminal mobile **4** (interaction **102**) et transmis au serveur de contrôle de transaction **2** (interaction **103**) voit donc son contenu enrichi par la présence de la deuxième chaîne aléatoire ajoutée par le terminal de vente **1.**

A réception du code QR **5** le serveur de contrôle de transaction **2**, sépare le code QR **5** en deux parties:
- la partie contenant l'information supplémentaire, ici le jeton d'authentification qui va servir à identifier le terminal de vente;
- la partie contenant la deuxième chaîne aléatoire qui a été ajoutée par le terminal de vente **1.**

La construction d'un premier message crypté par le serveur de contrôle de transaction **2**, comprend:
- la génération d'une première chaîne aléatoire par le serveur de contrôle de transaction **2**;
- la concaténation du code secret utilisateur déchiffré avec ladite première chaîne aléatoire;
- l'utilisation d'un premier algorithme de cryptographie, afin de crypter la première chaîne aléatoire et le code secret concaténés.

Dans un mode de réalisation, la partie du code QR **5** contenant ladite deuxième chaîne aléatoire, va permettre de compléter la construction dudit premier message crypté :
Ladite première chaîne aléatoire générée par le par le serveur de contrôle de transaction **2**, est concaténée avec le code secret utilisateur, ensuite concaténée avec ladite deuxième chaîne aléatoire contenue dans le code QR **5.** La chaîne obtenue est enfin cryptée selon un premier algorithme de cryptographie. On obtient alors le premier message crypté correspondant au CSC.

De même, après la saisie et validation du code secret par l'utilisateur (interaction **107**), le terminal de vente **1** concatène le code saisi avec ladite première chaîne aléatoire transmise par l'interaction **105**, puis avec ladite deuxième chaîne aléatoire qu'il a généré. Il applique ensuite le même type de cryptage, c'est-à-dire utilise le même dit premier algorithme de cryptographie que le serveur de contrôle de transaction **2**, afin de générer le deuxième message crypté correspondant au « CSC saisi ».

Un avantage de l'utilisation d'une deuxième chaîne aléatoire pour la construction des CSC et « CSC saisi » (respectivement premier et deuxième message crypté) réside dans la complexité de ces messages. Plus particulièrement en termes d'effet technique, cela permet de renforcer l'entropie de ces messages : le nombre de combinaisons à tester pour une attaque de type « force brute » sur l'interaction **108** devient particulièrement important. Ainsi même si un hacker dispose de l'algorithme de cryptographie employé pour la construction de ces messages, la présence de deux chaînes aléatoires rend un tel procédé très complexe à mettre en oeuvre voire quasiment impossible, compte tenu du nombre de combinaisons à tester.

Comme autre avantage, on peut noter que contrairement à la première chaîne aléatoire transmise par l'interaction **105**, la deuxième chaîne aléatoire n'est pas transmise directement entre le serveur de contrôle de transaction **2** et le terminal de vente **1.** Ainsi même si un hacker parvenait à intercepter l'interaction **105** contenant la première chaîne aléatoire, et disposait de l'algorithme de cryptographie que le terminal de vente **1** utilise, la présence de ladite deuxième chaîne aléatoire limiterait le risque d'une attaque de type « force brute ».

Ledit « CSC saisi » est alors employé comme clef de chiffrement au cours d'un deuxième algorithme de chiffrement pour construire un nouveau message (troisième message chiffré). Ledit troisième message chiffré est constitué d'une chaîne aléatoire contenant elle-même l'identifiant du terminal de vente **1** à certaines positions connues du terminal de vente **1** et du serveur de contrôle de transaction **2.**

Ledit troisième message chiffré construit par le terminal de vente **1** est ensuite transmis (interaction **108**) au serveur de contrôle de transaction **2.**

Après réception dudit troisième message, le serveur de contrôle de transaction **2** utilise le CSC qu'il a stocké dans la base de données **3** comme clef de déchiffrement en se basant sur le même dit deuxième algorithme de chiffrement, pour déchiffrer le message reçu, en utilisant sa connaissance des positions de l'identifiant du terminal. Si l'identifiant du terminal de vente **1** est trouvé dans le message déchiffré alors le code secret saisi par l'utilisateur, transmis lors de l'interaction **107**, est correct. Dans le cas contraire, si l'identifiant du terminal de vente **1** n'est pas trouvé dans le message déchiffré, cela signifie que le « CSC saisi » diffère du CSC stocké dans la base de données **3**, le code saisi par l'utilisateur est donc incorrect.

Il est à noter ici que l'utilisation de l'identifiant du terminal de vente **1** pour la construction du troisième message chiffré, des positions dudit identifiant et sa reconnaissance lors du déchiffrement dudit troisième message chiffré, est donné à titre d'exemple non limitatif. De manière générale, il est possible d'utiliser toute autre information convenue au préalable entre le terminal de vente **1** et le serveur de contrôle de transaction **2**, ou encore toute autre information connue de part et d'autre. On peut citer comme autre information à titre d'exemple, l'adresse IP du terminal de vente **1.**

Le serveur de contrôle de transaction **2** génère alors en fonction du contenu dudit message déchiffré un message de contrôle. Ledit message de contrôle est constitué d'une chaîne aléatoire dans laquelle le serveur de contrôle de transaction **2** va placer à des positions connues du terminal de vente **1** et de lui même un code d'instruction de transaction, désigné ici par « code retour » de la transaction. A titre d'exemple le « code retour » est un message codé associé au statut de la transaction : « OK » si celle-ci est validée ou « KO » dans le cas contraire.

Ledit message de contrôle est ensuite chiffré à l'aide du CSC stocké dans la base de données **3** selon un troisième algorithme de chiffrement (obtention d'un quatrième message chiffré), puis transmis au point de vente **1** par l'interaction **109.**

A la réception dudit quatrième message chiffré, le point de vente **1** utilise le « CSC saisi » comme clef de déchiffrement en se basant sur le même dit troisième algorithme de chiffrement, pour déchiffrer ledit quatrième message chiffré. Ledit message déchiffré correspond ainsi audit message de contrôle. Le point de vente extrait alors dudit message de contrôle le « code retour » de la transaction en utilisant sa connaissance des positions dudit « code retour ».

Si ce « code retour » extrait est jugé cohérent par le terminal de vente **1**, cela signifie que le code secret saisi par l'utilisateur est correct. L'autorisation et/ou la clôture de transaction sont alors effectuées en fonction du contenu dudit « code retour ». A titre d'exemple on peut vérifier dans le « code retour » la présence d'un message codé associé au statut « OK » ou « KO» d'une transaction.

Dans le cas contraire l'utilisateur est invité à de nouveau saisir son code secret (interactions **106** et **107**) pour le retransmettre.

Par ailleurs en cas de saisie d'un code secret erroné par l'utilisateur, la probabilité que le « CSC saisi » puisse permettre de déchiffrer le message de contrôle (transmis par l'interaction **109**) afin d'en extraire un « code retour » cohérent, dépend de la longueur des informations à contrôler.

On peut citer à titre d'informations à contrôler, la longueur du « code retour » de transaction présent dans ledit message de contrôle.

Ainsi, dans un mode de réalisation, on convient de construire un « code retour » suffisamment long, afin de tendre vers une probabilité d'extraction d'un « code retour » cohérent quasi nulle, si le code secret de l'utilisateur est erroné.

Avantageusement, on peut compléter ce « code retour » lors de sa construction par des octets de contrôle de type CRC32.

Avantageusement un intrus écoutant les messages échangés entre le terminal de vente **1** et le serveur de contrôle de transaction **2** ne parvient pas à construire un message notifiant, par l'interaction **109**, au terminal de vente **1** qu'il peut clôturer favorablement (ou défavorablement) la transaction.

Un autre avantage de cette invention est que deux codes identiques saisis sur un même terminal de vente **1** donnent lieu à la construction de deux messages différents au cours de la même transaction, il est donc impossible pour un intrus d'analyser le protocole employé.

Avantageusement, la méthode qui vient d'être décrite permet :
- d'améliorer la sécurisation des transactions électroniques;
- de renforcer la sécurisation des échanges effectués entre un serveur de contrôle de transaction et un terminal de vente;
- d'améliorer le contenu des échanges entre un serveur de contrôle de transaction et un terminal de vente sans pour autant modifier leurs interactions respectives;
- d'empêcher toute analyse extérieure des protocoles utilisés;
- d'empêcher toute attaque de type « force brute »;
- de limiter tout risque d'attaques du type « Man in the Middle ».

## Revendications

1. Méthode de sécurisation des communications entre un terminal de vente (**1**) et un serveur de contrôle de transaction (**2**) en utilisant un terminal mobile (**4**), ladite méthode comprenant :
- la génération par le terminal de vente (**1**) d'une deuxième chaîne aléatoire qui est transférée du terminal de vente (**1**) au terminal mobile (**4**) et du terminal mobile (**4**) au serveur de contrôle de transaction (**2**) ;
- la construction, par le serveur de contrôle de transaction (**2**), selon un premier algorithme de cryptographie, d'un premier message crypté comprenant une première chaîne aléatoire générée par le serveur de contrôle de transaction (**2**), un code secret, et la dite deuxième chaîne aléatoire;
- la saisie du code secret sur le terminal de vente (**1**) ;
- la transmission par le serveur de contrôle de transaction (**2**) au terminal de vente (**1**) de ladite première chaîne aléatoire(**105**) ;
- la construction, par le terminal de vente (**1**), selon le même dit premier algorithme de cryptographie, d'un deuxième message crypté comprenant le code secret saisi, ladite première chaîne aléatoire et ladite deuxième chaîne aléatoire;
cette méthode comprenant en outre
- la construction, par ledit terminal de vente (**1**), selon un deuxième algorithme de chiffrement, d'un troisième message chiffré à partir d'au moins une troisième donnée, en utilisant ledit deuxième message crypté comme clef de chiffrement;
- la transmission (**108**), par ledit terminal de vente (**1**), dudit troisième message chiffré audit serveur de contrôle de transaction (**2**);
- le déchiffrement, par ledit serveur de contrôle de transaction (**2**), selon ledit deuxième algorithme de chiffrement, dudit troisième message chiffré, en utilisant ledit premier message crypté comme clé de déchiffrement;
- la comparaison, par ledit serveur de contrôle de transaction (**2**), du contenu dudit troisième message déchiffré avec ladite troisième donnée pour vérifier si le code secret saisi sur le terminal de vente est correct, la troisième donnée étant connue du serveur de contrôle de transaction (**2**);
- la construction, par ledit serveur de contrôle de transaction (**2**), selon un troisième algorithme de chiffrement, d'un quatrième message chiffré en fonction du contenu dudit troisième message déchiffré, en utilisant ledit premier message crypté comme clé de chiffrement;
- la transmission (**109**), par ledit serveur de contrôle de transaction (**2**), dudit quatrième message chiffré audit terminal de vente (**1**);
- le déchiffrement, par ledit terminal de vente (**1**), selon ledit troisième algorithme de chiffrement, dudit quatrième message chiffré, en utilisant ledit deuxième message crypté comme clé de déchiffrement.

2. Méthode selon la revendication 1, comprenant en outre une étape d'autorisation ou de clôture d'une transaction, par ledit terminal de vente (**1**), en fonction dudit quatrième message déchiffré.

3. Méthode selon les revendications 1 ou 2, dans laquelle ladite troisième donnée comprend une chaîne aléatoire, contenant en des positions connues du terminal de vente (**1**) et du serveur de contrôle de transaction (**2**), une information convenue au préalable entre le terminal de vente (**1**) et le serveur de contrôle de transaction (**2**).

4. Méthode selon les revendications 1 ou 3, dans laquelle la construction dudit quatrième message chiffré, comprend le chiffrement d'une chaîne aléatoire, contenant en des positions connues du terminal de vente (**1**) et du serveur de contrôle de transaction (**2**), un code de retour de transaction.

5. Méthode selon la revendication précédente, dans laquelle ledit code retour est complété par des octets de contrôle lors de sa construction.

6. Système pour sécuriser des communications entre un terminal de vente (**1**) et un serveur de contrôle de transaction (**2**) en utilisant un terminal mobile (**4**), ledit système comprenant :
- un terminal de vente (**1**) configuré pour générer une deuxième chaîne aléatoire destiné à être transférée du terminal de vente (**1**) à un terminal mobile (**4**) et du terminal mobile (**4**) à un serveur de contrôle de transaction (**2**) ;
- le serveur de contrôle de transaction (**2**) étant configuré pour construire, selon un premier algorithme de cryptographie, un premier message crypté comprenant une première chaîne aléatoire générée par le serveur de contrôle de transaction (**2**), un code secret, et la dite deuxième chaîne aléatoire;
- le serveur de contrôle de transaction (**2**) configuré pour transmettre au terminal de vente (**1**) ladite première chaîne aléatoire(**105**);
- le terminal de vente (**1**) configuré pour construire, selon le même dit premier algorithme de cryptographie, un deuxième message crypté comprenant le code secret saisi sur le terminal de vente (**1**), ladite première chaîne aléatoire et ladite deuxième chaîne aléatoire;
ce système comprenant en outre
- le terminal de vente (**1**) configuré pour construire, selon un deuxième algorithme de chiffrement, d'un troisième message chiffré à partir d'au moins une troisième donnée, en utilisant ledit deuxième message crypté comme clef de chiffrement;
- le terminal de vente (**1**) configuré pour transmettre (**108**) ledit troisième message chiffré audit serveur de contrôle de transaction (**2**);
- le serveur de contrôle de transaction (**2**) configuré pour déchiffrer, selon ledit deuxième algorithme de chiffrement, ledit troisième message chiffré, en utilisant ledit premier message crypté comme clé de déchiffrement;
- le serveur de contrôle de transaction (**2**) configuré pour comparer le contenu dudit troisième message déchiffré avec ladite troisième donnée pour vérifier si le code secret saisi sur le terminal de vente est correct, la troisième donnée étant connue du serveur de contrôle de transaction (**2**);
- le serveur de contrôle de transaction (**2**) configuré pour construire, selon un troisième algorithme de chiffrement, un quatrième message chiffré en fonction du contenu dudit troisième message déchiffré, en utilisant ledit premier message crypté comme clé de chiffrement;
- le serveur de contrôle de transaction (**2**) configuré pour transmettre (**109**) ledit quatrième message chiffré audit terminal de vente (**1**);
- le terminal de vente (**1**) configuré pour déchiffrer selon ledit troisième algorithme de chiffrement ledit quatrième message chiffré en utilisant ledit deuxième message crypté comme clé de déchiffrement.

7. Système selon la revendication précédente où le terminal de vente (**1**) est configuré en outre pour appliquer une étape d'autorisation ou de clôture de transaction en fonction dudit quatrième message déchiffré.

8. Produit programme d'ordinateur implémenté sur un support mémoire, susceptible d'être mis en oeuvre au sein d'une unité de traitement informatique et comprenant des instructions pour la mise en oeuvre d'une méthode selon l'une des revendications 1 à 5.

## Patentansprüche

1. Methode zur Sicherung der Kommunikationen zwischen einem Verkaufsterminal (1) und einem Transaktionskontrollserver (2) unter Benutzung eines mobilen Terminals (4), bestehend aus:
- der Generierung durch das Verkaufsterminal (1) einer zweiten zufälligen Zeichenfolge, die vom Verkaufsterminal (1) an das mobile Terminal (4) und vom mobilen Terminal (4) an den Transaktionskontrollserver (2) weitergeleitet wird;
- der Erstellung, durch den Transaktionskontrollserver (2), gemäß eines ersten Verschlüsselungsalgorithmus, einer ersten verschlüsselten Nachricht bestehend aus einer ersten vom Transaktionskontrollserver (2) generierten zufälligen Zeichefolge, einer Geheimzahl, und der besagten zweiten zufälligen Zeichenfolge;
- der Erfassung der Geheimzahl am Verkaufsterminal (1); (105);
- der Übertragung durch den Transaktionskontrollserver (2) an das Verkaufsterminal (1) der besagten ersten zufälligen Zeichenfolge;
- der Erstellung, durch das Verkaufsterminal (1), gemäß demselben besagten ersten Verschlüsselnungsalgorithmus, einer zweiten verschlüsselten Nachricht, bestehend aus der erfassten Geheimzahl, der besagten ersten zufälligen Zeichenfolge und der besagten zweiten zufälligen Zeichenfolge;
Vorliegende Methode besteht ferner aus
- der Erstellung, durch das besagte Verkaufsterminal (1), gemäß einem zweiten Verschlüsselungsalgorithmus, einer dritten verschlüsselten Nachricht ab mindestens einer dritten Zahlenangabe, unter Verwendung der besagten zweiten verschlüsselten Nachricht als Verschlüsselungsschlüssel;
- der Übertragung (108), durch das besagte Verkaufsterminal (1), der besagten dritten verschlüsselten Nachricht an den besagten Transaktionskontrollserver (2);
- der Entschlüsselung, durch den besagten Transaktionskontrollserver (2), gemäß dem besagten zweiten Verschlüsselungsalgorithmus, der besagten dritten verschlüsselten Nachricht, unter Verwendung der besagten ersten verschlüsselten Nachricht als Verschlüsselungsschlüssel;
- dem Vergleich, durch den besagten Transaktionskontrollserver (2), des Inhalts der besagten dritten entschlüsselten Nachricht mit der besagten dritten Zahlenangabe, um zu prüfen, ob die auf dem Verkaufsterminal erfasste Geheimzahl richtig ist, wobei die dritte Zahlenangabe dem Transaktionskontrollserver (2) bekannt ist;
- der Erstellung, durch den besagten Transaktionskontrollserver (2), gemäß einem dritten Verschlüsselungsalgorithmus, einer vierten verschlüsselten Nachricht in Abhängigkeit vom Inhalt der besagten dritten entschlüsselten Nachricht, unter Verwendung der besagten ersten verschlüsselten Nachricht als Verschlüsselungsschlüssel;
- der Übertragung (109), durch den besagten Transaktionskontrollserver (2), der besagten vierten verschlüsselten Nachricht an das besagte Verkaufsterminal (1);
- der Entschlüsselung, durch das besagte Verkaufsterminal (1), gemäß dem besagten dritten Verschlüsselungsalgorithmus, der besagten vierten verschlüsselten Nachricht, unter Verwendung der besagten zweiten verschlüsselten Nachricht als Verschlüsselungsschlüssel.

2. Methode gemäß Anspruch1, bestehend ferner aus einer Phase der Genehmigung bzw. der Schließung einer Transaktion, durch das besagte Verkaufsterminal (1), in Abhängigkeit von der besagten vierten entschlüsselten Nachricht.

3. Methode gemäß den Ansprüchen 1 oder 2, **dadurch gekennzeichnet, dass** die besagte dritte Zahlenangabe aus einer zufälligen Zeichenfolge besteht und an den vom Verkaufsterminal (1) und vom Transaktionskontrollserver (2) bekannten Stellen, eine zuvor vom Verkaufsterminal (1) und vom Transaktionskontrollserver (2) vereinbarte Information enthält.

4. Methode gemäß den Ansprüchen 1 oder 3, **dadurch gekennzeichnet, dass** die Erstellung der besagten vierten verschlüsselten Nachricht, die Verschlüsselung einer zufälligen Zeichenfolge umfasst und an den vom Verkaufsterminal (1) und vom Transaktionskontrollserver (2) bekannten Stellen, einen Returncode der Transaktion enthält.

5. Methode gemäß dem vorstehende Anspruch, **dadurch gekennzeichnet, dass** der besagte Returncode bei seiner Erstellung durch Prüfbytes vervollständigt wird.

6. System zur Sicherung der Kommunikationen zwischen einem Verkaufsterminal (1) und einem Transaktionskontrollserver (2) unter Verwendung eines mobilen Terminals (4), wobei das besagte System aus folgenden Elemente besteht:
- einem konfigurierten Verkaufsterminal (1) zur Generierung einer zweiten zufälligen Zeichenfolge, die dazu bestimmt ist, vom Verkaufsterminal (1) an ein mobiles Terminal (4) und vom mobilen Terminal (4) an einen Transaktionskontrollserver (2) weitergeleitet zu werden;
- dem konfigurierten Transaktionskontrollserver (2) zur Erstellung einer ersten verschlüsselten Nachricht, gemäß einem ersten Verschlüsselungsalgorithmus, bestehend aus einer ersten durch den Transaktionskontrollserver (2) generierten zufälligen Zeichenfolge, einer Geheimzahl und der besagten zweiten zufälligen Zeichenfolge;
- dem konfigurierten Transaktionskontrollserver (2) zur Übertragung der besagten zufälligen Zeichenfolge (105) an das Verkaufsterminal (1);
- dem konfigurierten Verkaufsterminal (1) zur Erstellung, gemäß demselben besagten ersten Verschlüsselungsalgorithmus, einer zweiten verschlüsselten Nachricht bestehend aus der am Verkaufsterminal (1) erfassten Geheimzahl, der besagten ersten zufälligen Zeichenfolge und der besagten zweiten zufälligen Zeichenfolge;
Ferner umfasst das System
- das konfigurierte Verkaufsterminal (1) zur Erstellung, gemäß eines zweiten Verschlüsselungsalgorithmus, einer dritten verschlüsselten Nachricht ab mindestens einer dritten Zahlenangabe, unter Verwendung der besagten zweiten verschlüsselten Nachricht als Verschlüsselungsschlüssel;
- das konfigurierte Verkaufsterminal (1) zur Übertragung (108) der besagten dritten verschlüsselten Nachricht an den Transaktionskontrollserver (2);
- den konfigurierten Transaktionskontrollserver (2) zur Entschlüsselung, gemäß des besagten zweiten Verschlüsselungsalgorithmus, die besagte dritte verschlüsselte Nachricht, unter Verwendung der besagten ersten verschlüsselten Nachricht als Verschlüsselungsschlüssel;
- den konfigurierten Transaktionskontrollserver (2) zum Vergleichen des Inhalts der besagten dritten entschlüsselten Nachricht anhand der besagten dritten Zahlenangabe, um zu prüfen, ob die am Verkaufsterminal erfassten Geheimzahl richtig ist, wobei die dritte Zahlenangabe dem Transaktionskontrollserver (2) bekannt ist;
- den konfigurierten Transaktionskontrollserver (2) zur Erstellung, gemäß eines dritten Verschlüsselungsalgorithmus, einer vierten verschlüsselten Nachricht in Abhängigkeit vom Inhalt der besagten dritten entschlüsselten Nachricht, unter Verwendung der besagten ersten verschlüsselten Nachricht als Verschlüsselungsschlüssel;
- den konfigurierten Transaktionskontrollserver (2) zum Übertragen (109) der besagten vierten verschlüsselten Nachricht an das besagte Verkaufsterminal (1);
- das konfigurierte Verkaufsterminal (1) zum Entschlüsseln, gemäß dem besagten dritten Verschlüsselungsalgorithmus, die besagte vierte verschlüsselte Nachricht unter Verwendung der besagten zweiten verschlüsselten Nachricht als Verschlüsselungsschlüssel;

7. System gemäß vorstehendem Anspruch, bei dem das Verkaufsterminal (1) darüber hinaus auch konfiguriert ist, um eine Phase der Genehmigung oder der Schließung der Transaktion anzuwenden, in Abhängigkeit der besagten vierten entschlüsselten Nachricht.

8. Computerprogramm, das auf einem Speichermedium implementiert ist und in einer IT-Verarbeitungseinheit benutzt werden kann, bestehend aus Anweisungen für die Anwendung einer Methode gemäß einer der Ansprüche 1 bis 5.

## Claims

1. A method for securing communications between a point-of-sale terminal (1) and a transaction control server (2) using a mobile terminal (4), said method comprising:
- generating by the point-of-sale terminal (1) a second random chain which is transferred from the point-of-sale terminal (1) to the mobile terminal (4) and from the mobile terminal (4) to the transaction control server (2);
- building, by the transaction control server (2), according to a first cryptography algorithm, a first encrypted message comprising a first random chain generated by the transaction control server (2), a secret code, and said second random chain;
- inputting the secret code on the point-of-sale terminal (1);
- transmitting by the transaction control server (2) to the point-of-sale terminal (1) said first random chain (105);
- building, by the point-of-sale terminal (1), according to the same said first cryptography algorithm, a second encrypted message comprising the secret code inputted, said first random chain and said second random chain;
this method further comprising
- building, by said point-of-sale terminal (1), according to a second ciphering algorithm, a third ciphered message from at least one third datum, using said second encrypted message as a ciphering key;
- transmitting (108), by said point-of-sale terminal (1), said third ciphered message to said transaction control server (2);
- deciphering, by said transaction control server (2), according to said second ciphering algorithm, said third ciphered message, by using said first encrypted message as a deciphering key;
- comparing, by said transaction control server (2), the content of said third deciphered message with said third datum to check whether the secret code inputted on the point-of-sale terminal is correct, the third datum being known from the transaction control server (2);
- building, by said transaction control server (2), according to a third ciphering algorithm, a fourth ciphered message as a function of the content of said third deciphered message, using the first encrypted message as a ciphering key;
- transmitting (109), by said transaction control server (2), said fourth ciphered message to said point-of-sale terminal (1);
- deciphering, by said point-of-sale terminal (1), according to said third ciphering algorithm, said fourth ciphered message, using said second encrypted message as a deciphering key.

2. The method according to claim 1, further comprising a step of allowing or closing a transaction, by said point-of-sale terminal (1), as a function of said fourth deciphered message.

3. The method according to claims 1 or 2, wherein said third datum comprises a random chain, containing at known positions of the point-of-sale terminal (1) and of the transaction control server (2), a piece of information previously set between the point-of-sale terminal (1) and the transaction control server (2).

4. The method according to claims 1 or 3, wherein building said fourth ciphered message comprises ciphering a random chain, containing at known positions of the point-of-sale terminal (1) and of the transaction control server (2), a transaction return code.

5. The method according to the preceding claim, wherein said return code is completed by control bytes when builded.

6. A system for securing communications between a point-of-sale terminal (1) and a transaction control server (2) using a mobile terminal (4), said system comprising:
- a point-of-sale terminal (1) configured to generate a second random chain for being transferred from the point-of-sale terminal (1) to a mobile terminal (4) and from the mobile terminal (4) to a transaction control server (2);
- the transaction control server (2) being configured to build, according to a first cryptography algorithm, a first encrypted message comprising a first random chain generated by the transaction control server (2), a secret code, and said second random chain;
- the transaction control server (2) configured to transmit to the point-of-sale terminal (1) said first random chain (105);
- the point-of-sale terminal (1) configured to build, according to the same said first cryptography algorithm, a second encrypted message comprising the secret code inputted on the point-of-sale terminal (1), said first random chain and said second random chain;
this system further comprising:
- the point-of-sale terminal (1) configured to build, according to a second ciphering algorithm, a third ciphered message from at least one third datum, using said second encrypted message as a ciphering key;
- the point-of-sale terminal (1) configured to transmit (108) said third ciphered message to said transaction control server (2);
- the transaction control server (2) configured to decipher, according to said second ciphering algorithm, said third ciphered message, using said first encrypted message as a deciphering key;
- the transaction control server (2) configured to compare the content of said third deciphered message with said third datum to check whether the secret code inputted on the point-of-sale terminal is correct, the third datum being known from the transaction control server (2);
- the transaction control server (2) configured to build, according to a third ciphering algorithm, a fourth ciphered message as a function of the content of said third deciphered message, using said first encrypted message as a ciphering key;
- the transaction control server (2) configured to transmit (109) said fourth ciphered message to said point-of-sale terminal (1);
- the point-of-sale terminal (1) configured to decipher according to said third ciphering algorithm, said fourth ciphered message, using said second encrypted message as a deciphering key.

7. The system according to the preceding claim, wherein the point-of-sale terminal (1) is further configured to apply a step of allowing or closing a transaction as a function of said fourth deciphered message.

8. A computer program product implemented on a memory medium, likely to be carried out within a computing processing unit and comprising instructions for carrying out a method according to one of claims 1 to 5.
